# FASCICULE DE BREVET EUROPEEN

(11) **EP 0 474 568 B1**
(45) Date de publication et mention de la délivrance du brevet: **15.11.1995**
(21) Numéro de dépôt: 91420297.3
(22) Date de dépôt: 14.08.1991
(51) Int. Cl.: H04N 9/64

(54) **Système de réglage des filtres de traitement du signal vidéo composite dans un appareil secam multistandard**
Steuerungssystem für Filter einer Signalverarbeitungsschaltung für FBAS Videosignale in einem Mehrnormen-SECAM-Fernsehempfänger
Control system for composite video signal processing filters in a multi-standard Secam television receiver

(30) Priorité: 22.08.1990 FR 9010742
(43) Date de publication de la demande: 11.03.1992
(73) Titulaire: SGS-THOMSON MICROELECTRONICS S.A., 94250 Gentilly (FR)
(72) Inventeur: Meunier, Thierry, F-38340 Voreppe (FR)
(74) Mandataire: de Beaumont, Michel

(56) Documents cités:
- EP-A- 0 314 873
- FR-A- 2 537 817
- IEEE TRANSACTIONS ON CONSUMER ELECTRONICS, vol. CE-31, no. 3, août 1985, pages 147-155; A. PERY et al.: "A fully automatic multistandard TV chrominance decoder
- ELEKTOR ELECTRONICS, vol. 14, no. 156, mai 1988, pages 57-59; "Single-chip multi-standard colour decoder"
- IEEE TRANSACTIONS ON CONSUMER ELECTRONICS, vol. CE-33, no. 4, novembre 1987, pages 499-506; S. TAINSKY et al.: "Cost effective hi-performance color television"

## Description

La présente invention concerne des appareils adaptés à traiter des signaux de télévision multistandard, tels que des téléviseurs couleur, des magnétoscopes, des caméras video, des transcodeurs, des mixeurs, etc., et plus particulièrement, dans de tels appareils, les filtres d'extraction et de réjection du signal de chrominance à partir du signal vidéo composite, et le réglage de ces filtres.

Dans les divers systèmes de télévison, on trouve à un niveau d'entrée ou à un niveau intermédiaire un signal couramment appelé signal vidéo composite (CVBS) qui comporte des informations de luminance (Y) et des informations de chrominance (C).

Pour extraire les informations de chrominance, on utilise, dans le cas des normes PAL et NTSC un filtre passe-bande de facteur de qualité moyen (par exemple Q = 3) centré sur la fréquence des signaux de chrominance qui est généralement de 3,58 ou 4,43 MHz. Dans le cas de la norme SECAM, on est amené à utiliser un filtre particulier appelé filtre en cloche, présentant un facteur de qualité élevé (par exemple Q = 16) et centré sur une fréquence voisine de la fréquence de référence du PAL, usuellement 4,286 MHz.

Pour fournir le signal de luminance, on filtre le signal vidéo composite par un filtre coupe-bande, couramment appelé filtre trappe, centré sur la fréquence du signal de chrominance pour éliminer celui-ci et conserver seulement la plus grande partie du signal de luminance.

Classiquement, chacun de ces filtres était réalisé en utilisant des éléments discrets (inductances et capacités) et ces éléments pouvaient être des éléments précis permettant d'ajuster avec précision la fréquence de chacun des filtres.

Un article de A. Pery et J.C. Ruffray, IEEE Transactions on Consumer Electronics, volume CE-31, N° 3, août 1985, pages 147-155, un système de réglage automatique d'un filtre de chrominance mais dans lequel oe filtre est modifié et utilisé comme charge d'un oscillateur pendant les phases de réglage.

Avec l'évolution de la technique, on a développé des structures permettant de réaliser chacun des filtres mentionnés sous forme de circuit intégré sans composants discrets externes. Néanmoins, les grandes dispersions de fabrication des circuits intégrés entraînent que les fréquences centrales des divers filtres peuvent varier de façon très importante, jusqu'à 30 %. Il faudrait donc associer à chacun des filtres des moyens de réglage externes, ce qui réduirait fortement les avantages de l'intégration.

Un objet particulier de la présente invention est de prévoir un ensemble de filtres de traitement du signal vidéo composite dans lequel tous les filtres sont réalisés sous forme intégrée et ne comprennent aucun, ou au plus un, réglage externe.

Un objet général de la présente invention est de prévoir un mode de réglage d'un filtre de traitement du signal vidéo composite dans lequel ce filtre est utilisé tel quel et dans sa fonction de filtre pendant des phases de réglage.

Pour atteindre son objet général, la présente invention prévoit un système de réglage d'un filtre destiné au filtrage du signal vidéo composite dans un appareil multistandard dans lequel des moyens sont prévus pour déterminer des phases d'accord pendant des phases mortes du signal video composite ; un signal de référence est appliqué au filtre perdant les phases d'accord ; une boucle à verrouillage de phase fournit un signal d'erreur correspondant au décentrage du filtre ; et des moyens sont prévus pour mémoriser le signal d'erreur de la boucle.

Pour atteindre son objet particulier, la présente invention prévoit un système de réglage d'un ensemble de filtres destinés au filtrage du signal vidéo composite dans un appareil multistandard, cet ensemble de filtres comprenant notamment un premier filtre ou filtre en cloche destiné à l'extraction du signal de chrominance en SECAM, un deuxième filtre ou filtre passe-bande destiné à l'extraction du signal de chrominance en PAL ou NTSC, et un troisième filtre ou filtre trappe destiné à éliminer le signal de chrominance. Dans ce système, ces filtres sont réalisés sous forme intégrée, sans composants discrets, ont une fréquence centrale réglable par un signal de commande, et leurs composants fixant leurs fréquences centrales au repos sont identiques ; des moyens sont prévus pour déterminer des phases d'accord pendant des phases mortes du signal de télévision ; un signal de référence est appliqué à l'un ou l'autre des premier et deuxième filtres pendant les phases d'accord ; une boucle à verrouillage de phase fournit un signal d'erreur correspondant au décentrage du filtre ; des moyens sont prévus pour mémoriser le signal d'erreur de la boucle à verrouillage de phase ; et des moyens sont prévus pour appliquer le signal mémorisé à tous les filtres de l'ensemble de filtres.

Selon un mode de réalisation de la présente invention, la boucle de verrouillage de phase compare, pendant les phases d'accord, le signal de sortie du filtre à un signal identique au signal de référence mais déphasé de 90°.

Selon un mode de réalisation de la présente invention, le signal de commande est appliqué à au moins l'un des filtres par l'intermédiaire d'un opérateur qui reçoit en outre un signal permettant de décaler la fréquence centrale du filtre d'une valeur prédéterminée.

Selon un mode de réalisation de la présente invention, des moyens de communication sont prévus pour associer dans un premier temps la boucle de verrouillage de phase au deuxième filtre et dans un deuxième temps au premier filtre.

Selon un mode de réalisation de la présente invention, l'opérateur associé au filtre sur la base duquel est effectué le réglage reçoit en outre un signal continûment variable et réglable à une valeur choisie.

Selon un avantage de la présente invention, le réglage d'un seul filtre, réalisé de façon automatique, entraîne le réglage de tous les autres.

Selon un autre avantage de la présente invention, le fait de prévoir d'abord un réglage de la fréquence par le filtre passe-bande et ensuite par le filtre en cloche, permet un accrochage plus facile du réglage puisque, la boucle de phase pourra accrocher plus facilement à partir du signal fourni en sortie du filtre passe-bande dont le facteur de qualité est beaucoup plus faible que celui du filtre en cloche. Le filtre en cloche servira ensuite à un réglage fin une fois le préréglage effectué.

Ces objets, caractéristiques et avantages ainsi que d'autres de la présente invention seront exposés plus en détail dans la description suivante des modes de réalisation particuliers faite en relation avec la figure unique jointe qui représente sous forme de schéma blocs, le système d'ensemble selon la présente invention.

Dans le circuit de la figure, le signal vidéo composite arrive sur une borne CVBS. Le signal de chrominance C est fourni sur une première borne de sortie et le signal de luminance Y est fourni sur une deuxième borne de sortie.

Pour sélectionner le signal de chrominance, dans le système SECAM, le signal CVBS passe par un filtre en cloche 1 et, dans le système NTSC ou PAL, il passe par un filtre passe-bande 2. Pour obtenir le signal de luminance Y, le signal CVBS passe par un filtre d'élimination du signal de chrominance ou filtre trappe 3. Un commutateur multivoies 4 permet de relier la borne C à la sortie du filtre en cloche 1 ou à la sortie du filtre passe-bande 2. Ce commutateur est commandé de façon classique par un circuit de reconnaissance de standard. Le commutateur 4 peut également être mis dans une position intermédiaire de repos pendant des phases de réglage ou phases d'accord qui seront décrites ci-après.

Selon un aspect fondamental de la présente invention, chacun des filtres 1, 2 et 3 est réalisé sous forme entièrement intégrée, sans aucun composant externe. De plus, les composants intégrés servant à déterminer la fréquence au repos de ces trois filtres sont identiques. Il en résulte que, si pour des raisons de variations technologiques ces filtres ne sont pas centrés sur la fréquence souhaitée, ils présenteront néanmoins la même fréquence de repos, c'est-à-dire le même écart par rapport à la fréquence désirée.

De plus, les trois filtres 1, 2 et 3 sont des filtres dans lesquels la fréquence centrale d'accord peut être réglée par un signal de commande appliqué à leur entrée de commande respective I₁, I₂ et I₃. Ainsi, si l'on applique aux trois entrées I₁, I₂ et I₃ un même signal de commande, les fréquences centrales des trois filtres seront décalées de la même façon.

Le circuit représenté comprend, à l'entrée commune des filtres 1 et 2, un commutateur 10 permettant de connecter ces entrées ou bien, comme cela a été décrit précédemment, à la borne CVBS, ou bien, pendant des phases d'accord, à un signal à une fréquence de référence f_{ref}. Ces phases d'accord correspondront à des phases pendant lesquelles il n'y a pas d'informations d'image, par exemple pendant des retours trame. Cette fréquence de référence correspond par exemple à la fréquence de chrominance en PAL ou NTSC (4,43 ou 3,58 MHz). Le système comprend en outre une boucle de verrouillage de phase comprenant un comparateur de phase 11 recevant sur une première entrée un signal f′_{ref} de même fréquence que le signal de référence appliqué à l'entrée du commutateur 10 mais avec un déphasage de 90°. La sortie du comparateur de phase 11 est mémorisé dans un circuit 12, par exemple un condensateur ou une mémoire associée en entrée à un convertisseur analogique/numérique et en sortie à un convertisseur numérique/analogique. Le contenu de cette mémoire est appliqué par un adaptateur 13 fournissant un courant I_{c} à une première entrée d'un additionneur 14 dont l'autre entrée reçoit un signal de consigne I₀. La sortie de l'additionneur 14 est envoyée aux entrées de commande I₁, I₂ et I₃ des filtres 1, 2 et 3. La deuxième entrée du comparateur de phase 11 est reliée à un commutateur 15 dont la deuxième borne peut être reliée ou bien à une position de repos en dehors des phases d'accord, ou bien à la sortie du filtre passe-bande, ou bien à la sortie du filtre en cloche.

Dans la figure, on a en outre représenté que l'application du signal I₀ + I_{C} à l'entrée I₁ du filtre en cloche est réalisée par l'intermédiaire d'un opérateur tel qu'un multiplieur 16 dont la fonction sera décrite ci-après.

On considère d'abord une phase d'accord dans laquelle la boucle de verrouillage de phase est fermée sur le filtre passe-bande 2. Dans cette configuration, le commutateur 10 est relié à la fréquence de référence, le commutateur 4 est en position de repos et le commutateur 15 est relié à la sortie du filtre passe-bande. Si le filtre passe-bande est parfaitement accordé sur la fréquence de référence f_{ref}, il fournit le signal f_{ref} non déphasé et le comparateur 11, qui reçoit deux signaux déphasés de 90°, fournit une sortie nulle. S'il y a un écart entre la fréquence centrale du filtre passe-bande et la fréquence de référence, le comparateur 11 fournit un signal d'erreur variant comme le déphasage introduit par le filtre, c'est-à-dire un signal d'erreur qui dépend de la différence entre la fréquence centrale effective du filtre et la fréquence de référence. Ce signal d'erreur est mémorisé dans un circuit 12 et transformé en courant par l'adaptateur 13 pour fournir un courant de correction I_{C} de sorte que le courant I₀ + I_{C} commande les filtres 1, 2 et 3 pour les recentrer.

En fait, la boucle d'asservissement qui vient d'être décrite est peu sensible au voisinage du réglage optimal étant donné que le filtre passe-bande 2 est un filtre à faible facteur de qualité. Ainsi, de préférence, si l'on souhaite un réglage très précis, une fois les opérations de préréglage précédemment décrites effectuées, on commutera le commutateur 15 sur la sortie du filtre en cloche 1. Celui-ci ayant un facteur de qualité élevé, un faible écart entre la fréquence centrale de ce filtre et la fréquence de référence fournira un déphasage notable et permettra d'ajuster le signal de correction I_{C}. Ce réglage en deux temps est souhaitable car l'utilisation directe du filtre en cloche risquerait de ne pas amener à une convergence de l'asservissement si l'écart initial entre la fréquence de référence et la fréquence au repos des filtres est trop important.

Dans ce qui précède, on a supposé que les trois filtres, qui ont la même fréquence de repos puisqu'ils sont fabriqués de façon identique, doivent en fonctionnant être réglés sur la même fréquence centrale. Cela n'est souvent pas le cas en pratique car, par exemple, pour le PAL la fréquence d'accord est de 4,43 MHz alors qu'en SECAM la fréquence centrale du filtre en cloche doit être de 4,286 MHz. Ainsi, on prévoira que, une fois l'asservissement effectué et la valeur de correction mémorisée dans la mémoire 12, un commutateur 17 est commuté vers une borne 18 pour appliquer au multiplieur 16 un signal d'ajustement. Ce signal d'ajustement, appliqué en dehors des phases d'accord, ne modifie pas le courant I_{C} et le réglage des filtres 2 et 3 mais permet de recaler le filtre en cloche sur une valeur souhaitée. La borne basse 19 du commutateur 17 correspond à une borne neutre. Si on le souhaite, un réglage d'ajustement similaire peut être prévu pour le filtre passe-bande ou le filtre trappe.

Le système de réglage décrit précédemment se suffit normalement à lui-même. Néanmoins, on peut souhaiter effectuer des réglages supplémentaires pour tenir compte d'erreurs éventuelles dues à certains éléments du circuit d'ensemble.

Pour cela, on prévoit une entrée supplémentaire Iₜ sur le multiplieur 16. Une fois le réglage effectué dans les conditions précédemment décrites, on mesure les signaux de sortie, par exemple la sortie du filtre trappe, et s'ils ne sont pas satisfaisants, on applique un courant sur l'entrée Iₜ du multiplieur 16 pendant les phases d'accord. Ceci modifie le courant I_{C} et toutes les fréquences d'accord des filtres. Par contre, si on agit sur Iₜ en dehors des périodes de réglage, on pourra modifier la fréquence d'accord du filtre en cloche sans modifier les fréquences d'accord du filtre passe-bande et du filtre trappe. L'application du signal Iₜ peut dépendre de potentiomètres externes ou d'une commande analogique externe. Elle peut aussi dépendre de signaux de commande transitant sur le bus existant généralement dans un téléviseur.

On a donné précédemment un exemple particulier de mise en oeuvre de la présente invention. Celle-ci pourra être soumise par l'homme de l'art à diverses variantes et notamment pour être adaptée à des normes de télévision particulières.

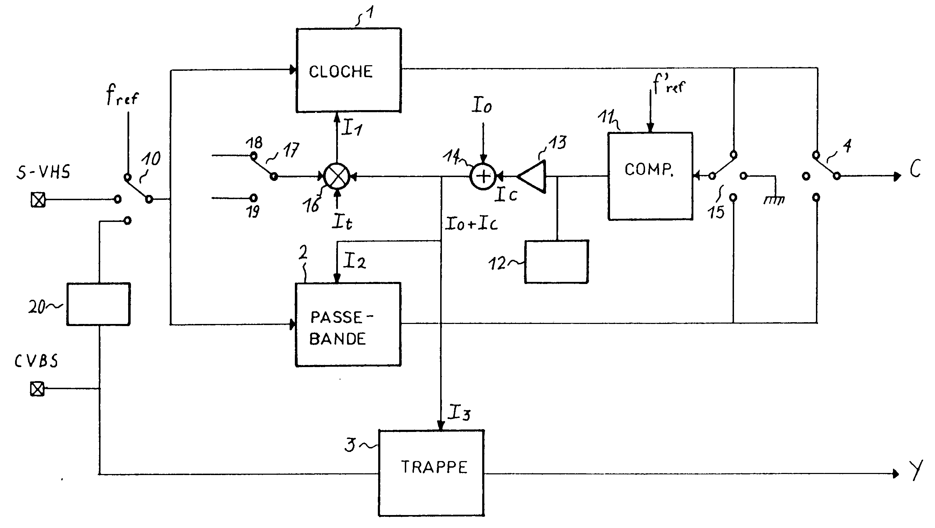

Par exemple, dans la norme de transmission dite SVHS, il existe une entrée de signal de chrominance exempt de signal de luminance. Cette entrée apparaît sur la borne S-VHS de la figure 1. Dans ce cas, pendant les phases de fonctionnement des filtres, le commutateur 10 sera relié à cette borne S-VHS.

D'autre part, de façon classique, on pourra prévoir que la borne CVBS est reliée directement à l'entrée du filtre trappe mais est reliée au commutateur 10 par l'intermédiaire d'un filtre de préfiltrage 20 destiné à diminuer sur l'entrée des filtres 1 et 2 les composantes basse fréquence du signal de luminance ce qui simplifie la réalisation de ces filtres.

Parmi les nombreux types de filtres utilisables dans le cadre de la présente invention, on peut citer les filtres décrits par Yoshio Ishigaki et al le 9 juin 1983 à IEEE International Conference on Consumer Electronics (publié dans le N°4, Vol CE 29, Nov. 1983, PP. 475-485 de IEEE Transactions on Consumer Electronics).

## Revendications

1. Système de réglage de la fréquence centrale d'un filtre destiné à la séparation des signaux de luminance et de chrominance du signal vidéo composite dans un appareil multistandard, comprenant :
des moyens pour déterminer des phases d'accord pendant des phases mortes du signal vidéo composite ;
un signal de référence (f_{ref}) à la fréquence centrale du filtre qui est appliqué au filtre pendant les phases d'accord ;
une boucle à verrouillage de phase fournissant un signal d'erreur correspondant au décentrage du filtre ; et
des moyens (14) pour mémoriser le signal d'erreur de la boucle à verrouillage de phase, ce signal d'erreur étant utilisé comme signal de commande pour le réglage de ladite fréquence centrale.

2. Système de réglage selon la revendication 1, caractérisé en ce que la boucle de verrouillage de phase compare, pendant les phases d'accord, le signal de sortie du filtre à un signal (f′_{ref}) identique au signal de référence mais déphasé de 90°.

3. Système de réglage selon la revendication 1, caractérisé en ce que le signal de commande est appliqué au filtre par l'intermédiaire d'un opérateur (16) qui reçoit en outre un signal (18) permettant de décaler la fréquence centrale du filtre d'une valeur prédéterminée.

4. Système de réglage d'un ensemble de filtres destinés au filtrage du signal vidéo composite dans un appareil multistandard, cet ensemble de filtres comprenant notamment :
un premier filtre ou filtre en cloche (1) destiné à l'extraction du signal de chrominance en SECAM,
un deuxième filtre ou filtre passe-bande (2) destiné à l'extraction du signal de chrominance en PAL ou NTSC,
un troisième filtre ou filtre trappe (3) destiné à éliminer le signal de chrominance,
caractérisé en ce que :
ces filtres sont réalisés sous forme intégrée, sans composants discrets, ont une fréquence centrale réglable par un signal de commande, et leurs composants fixant leurs fréquences centrales au repos sont identiques ;
des moyens sont prévus pour déterminer des phases d'accord pendant des phases mortes du signal de télévision ;
un signal de référence (f_{ref}) à la fréquence centrale du premier ou deuxième filtre est appliqué à l'un ou l'autre des premier et deuxième filtres pendant les phases d'accord ;
une boucle à verrouillage de phase fournit un signal d'erreur correspondant au décentrage du filtre ;
des moyens (14) sont prévus pour mémoriser le signal d'erreur de la boucle à verrouillage de phase ; et
des moyens (I₁, I₂, I₃) sont prévus pour appliquer le signal mémorisé en tant que signal de commande à tous les filtres de l'ensemble de filtres.

5. Système de réglage selon la revendication 4, caractérisé en ce que la boucle de verrouillage de phase compare, pendant les phases d'acord, le signal de sortie du filtre à un signal (f′_{ref}) identique au signal de référence mais dephasé de 90°.

6. Système de réglage selon la revendication 4, caractérisé en ce que le signal de commande est appliqué à au moins l'un des filtres par l'intermédiaire d'un opérateur (16) qui reçoit en outre un signal (18) permettant de décaler la fréquence centrale du filtre d'une valeur prédéterminée.

7. Système de réglage selon la revendication 4, caractérisé en ce que des moyens de commutation (15) sont prévus pour associer dans un premier temps la boucle de verrouillage de phase au deuxième filtre et dans un deuxième temps au premier filtre.

8. Système de réglage selon la revendication 6, caractérisé en ce que l'opération (16) associé au filtre sur la base duquel est effectué le réglage reçoit en outre un signal (Iₜ) continûment variable et réglable à une valeur choisie.

## Patentansprüche

1. System zur Steuerung der Mittenfrequenz eines Filters für die Trennung der Luminanz- und Chrominanz-Signale von dem zusammengesetzten Videosignal in einem Mehrnormenfernsehgerät, mit
Mitteln zum Bestimmen der Abstimmphasen während der toten Phasen des zusammengesetzten Videosignales;
einem Referenzsignal (f_{ref}) mit der Mittenfrequenz des Filters, das dem Filter während der Abstimmphasen zugeführt wird;
einer Phasenverriegelungsschleife, die ein Fehlersignal entsprechend der Verstimmung des Filters liefert; und
Mittel (14) zum Speichern des Fehlersignales der Phasenverriegelungsschleife, wobei dieses Fehlersignal als Steuersignal für die Steuerung der Mittenfrequenz verwendet wird.

2. Steuerungssystem nach Anspruch 1, dadurch gekennzeichnet, daß die Phasenverriegelungsschleife während der Abstimmphasen das Ausgangssignal des Filters mit einem Signal (f'_{ref}) vergleicht, das identisch mit dem Referenzsignal, jedoch um 90° phasenverschoben ist.

3. Steuerungssystem nach Anspruch 1, dadurch gekennzeichnet, daß das Steuersignal dem Filter über ein Operationsglied (16) zugeführt wird, das zusätzlich ein Signal (18) empfängt, um die Mittenfrequenz des Filters um einen vorbestimmten Wert zu verschieben.

4. Steuerungssystem für eine Anordnung von Filtern, die zur Filterung des zusammengesetzten Videosignals in einem Mehrnormengerät bestimmt sind, wobei diese Filteranordnung insbesondere aufweist:
ein erstes Filter oder Glockenfilter (1) für die Abtrennung des Chrominanzsignals in der SECAM-Norm,
ein zweites Filter oder Bandpaßfilter (2) zur Abtrennung des Chrominanzsignales in der PAL- oder NTSC-Norm,
ein drittes Filter oder Sperrfilter (3) zum Ausscheiden des Chrominanzsignales,
dadurch gekennzeichnet, daß:
diese Filter in integrierter Form ohne diskrete Komponenten ausgebildet sind und eine durch ein Steuersignal steuerbare Mittenfrequenz haben, wobei ihre die jeweiligen Mittenfrequenzen in Ruhe festlegenden Komponenten identisch sind;
Mittel vorgesehen sind, um die Abstimmphasen während der toten Phasen des Fernsehsignales zu bestimmen;
ein Referenzsignal (f_{ref}) mit der Mittenfrequenz des ersten oder zweiten Filters entweder dem ersten oder dem zweiten Filter während der Abstimmphasen zugeführt wird;
eine Phasenverriegelungsschleife ein Fehlersignal entsprechend der Verstimmung des Filters liefert;
Mittel (14) zum Speichern des Fehlersignales der Phasenverriegelungsschleife vorgesehen sind; und
Mittel (I₁, I₂, I₃) vorgesehen sind, um das gespeicherte Signal als Steuersignal allen Filtern der Filteranordnung zuzuführen.

5. Steuerungssystem nach Anspruch 4, dadurch gekennzeichnet, daß die Phasenverriegelungsschleife während der Abstimmphasen das Ausgangssignal des Filters mit einem Signal (f'_{ref}) vergleicht, welches identisch dem Referenzsignal, jedoch um 90° phasenverschoben ist.

6. Steuerungssystem nach Anspruch 4, dadurch gekennzeichnet, daß das Steuersignal zumindest einem der Filter über ein Operationsglied (16) zugeführt wird, welches zusätzlich ein Signal (18) empfängt, um die Mittenfrequenz des Filters um einen vorbestimmten Wert zu verschieben.

7. Steuerungssystem nach Anspruch 4, dadurch gekennzeichnet, daß Schaltmittel (15) vorgesehen sind, um während einer ersten Zeitspanne die Phasenverriegelungsschleife dem zweiten Filter und in einer zweiten Zeitspanne dem ersten Filter zuzuordnen.

8. Steuerungssystem nach Anspruch 6, dadurch gekennzeichnet, daß das Operationsglied (16), das dem Filter, welches für die Steuerung herangezogen wird, zugeordnet ist, zusätzlich ein Signal (Iₜ) empfängt, das kontinuierlich variabel und auf einen wählbaren Wert einstellbar ist.

## Claims

1. A system for adjusting the control frequency of a filter separating the luminance and chrominance signals from the composite video signal in a multistandard set, comprising:
means for determining tuning phases during quiescent phases of the composite video signal;
a reference signal (f_{ref}) at the control frequency of the filter that is applied to the filter during the tuning phases;
a phase-locked loop supplying an error signal corresponding to the phase-shift of the filter; and
means (14) for storing the error signal of the phase-locked loop, said error signal being used for the adjustment of said control frequency.

2. A system according to claim 1, characterized in that the phase-locked loop compares, during the tuning phases, the output signal of the filter to a signal (f′_{ref}) identical to the reference signal but shifted by 90°.

3. A system according to claim 1, characterized in that the control signal is applied to the filter through an operator (16) which further receives a signal (18) for shifting the central frequency of the filter by a predetermined value.

4. A system for adjusting an assembly of filters designed to filter the composite video signal in a multistandard set, said assemble of filter comprising in particular:
a first filter or bell filter (1) designed to extract the chrominance signal in the SECAM standard,
a second filter or band-pass filter (2) designed to extract the chrominance signal in PAL or NTSC standard,
a third filter or trap filter (3) designed to eliminate the chrominance signal,
characterized in that:
said filters are integrated, without discrete components, have a central frequency that can be adjusted by a control signal, and their components fixing their central quiescent frequencies are identical;
means are provided for determining tuning phases during the quiescent phases of the TV signal;
a reference signal (f_{ref}) at the control frequency of the first or second filter is applied to the first or second filter during the tuning phases;
a phase-locked loop supplies an error signal corresponding to the centering error of the filter;
means (14) are provided for storing the error signal of the phase-locked loop; and
means (I₁, I₂, I₃) are provided for applying the stored signal as a control signal to all the filters of the filter assembly.

5. A system according to claim 4, characterized in that the phase-locked loop compares, during the tuning phases, the filter output signal to a signal (f′_{ref}) identical to the reference signal but shifted in phase by 90°.

6. A system according to claim 4, characterized in that the control signal is applied to at least one of the filters through an operator (16) which further receives a signal (18) shifting the central frequency by a predetermined value.

7. A system according to claim 4, characterized in that the switching means (15) are provided for associating in a first step the phase-locked loop with the second filter and, in a second step, with the first filter.

8. A system according to claim 6, characterized in that the operator (16) associated with the filter serving as a basis for the adjustment further receives a signal (Iₜ) that continuously varies and can be set to a determined value.
